# EUROPÄISCHE PATENTSCHRIFT

(11) **EP 2 002 913 B1**
(45) Veröffentlichungstag und Bekanntmachung des Hinweises auf die Patenterteilung: **06.07.2011**
(21) Anmeldenummer: 08103974.5
(22) Anmeldetag: 15.05.2008
(51) Int. Cl.: B23D 57/00, B28D 1/08

(54) **Umlenkvorrichtung für eine Seilsägevorrichtung**
Deflection device for a wire saw device
Dispositif de déviation pour un dispositif de scie à fil

(30) Priorität: 14.06.2007 DE 102007000329
(43) Veröffentlichungstag der Anmeldung: 17.12.2008
(73) Patentinhaber: HILTI Aktiengesellschaft, 9494 Schaan (LI)
(72) Erfinder: Rieger, Hans-Jörg, 6712 Thüringen (AT); Plattner, Josef, 6200 Gallzein (AT)
(74) Vertreter: Wildi, Roland

(56) Entgegenhaltungen:
- WO-A-2004/006654
- US-A- 4 750 468

## Beschreibung

Die Erfindung betrifft eine Umlenkvorrichtung für eine Seilsägevorrichtung mit einer Umlenkrolle, die eine die Umlenkrolle zumindest bereichsweise umgebende, ortsfeste Schutzabdeckung sowie zumindest ein Abdeckelement aufweist, das entlang einer radial zur Rollenachse der Umlenkrolle beabstandeten Bahn versetzbar ist.

Seilsägevorrichtungen dienen insbesondere dem Sägen von grossen Werkstücken, wie z. B. von Steinblöcken, wobei das Sägeseil Schneidkörper, wie beispielsweise gesinterte Diamantperlen, aufweist und von einer Motoranordnung der Seilsägevorrichtung angetrieben wird. Mittels Umlenkvorrichtungen mit Umlenkrollen wird das Sägeseil um das zu schneidende Werkstück geführt und zu diesem ausgerichtet. Aufgrund der Art der Beanspruchung des Sägeseils kann plötzlich ein Seilriss auftreten und das gerissene Sägeseil peitschenartig durch die Luft schnellen.

US 4,750,468 zeigt eine Umlenkvorrichtung einer Seilsägevorrichtung gemäb dem Oberbegriff von Anspruch 1 mit einer Umlenkrolle, die eine die Umlenkrolle zumindest bereichsweise in Form einer Seitenplatte umgebende, ortsfeste Schutzabdeckung sowie zumindest ein verschwenkbares Abdeckelement in Form eines Schutzgehäuses aufweist.

Aus der EP 1 528 852 B1 ist eine Umlenkvorrichtung einer Sägevorrichtung mit einer Umlenkrolle bekannt, die als Schutz vor einer gerissenen Sägekette eine die Umlenkrolle zumindest bereichsweise umgebende, ortsfeste Schutzabdeckung sowie ein Abdeckelement mit einem radialen Wandabschnitt aufweist. Die Schutzabdeckung und das Abdeckelement weisen miteinander in Übereinstimmung bringbare Durchführöffnungen zur Durchführung eines Befestigungsmittels auf, womit das Abdeckelement entlang eine radial zur Rollenachse der Umlenkrolle beabstandeten Bahn versetzbar ist. Das Abdeckelement kann also in einem vorbestimmten Raster je nach Ausrichtung der umzulenkenden Sägekette an der ortsfesten Schutzabdeckung festgelegt werden.

Nachteilig an der bekannten Lösung ist, dass das Abdeckelement nur in einem vorbestimmten Raster in Bezug auf die Schutzabdeckung angeordnet werden kann und die Festlegung des Abdeckelementes aufwändig ist, da das Abdeckelement bei jeder Positionierung abgenommen werden muss.

Aufgabe der Erfindung ist es, eine Umlenkvorrichtun für eine Seilsägevorrichtung zu schaffen, die einen Schutz vor dem Sägeseil bei einem Seilriss gewährleistet und dabei einfach einstellbar ist.

Die Aufgabe ist durch die Merkmale des unabhängigen Anspruchs gelöst. Vorteilhafte Weiterbildungen sind in den Unteransprüchen dargelegt.

Gemäss der Erfindung ist das Abdeckelement verschwenkbar an der Rollenachse der Umlenkrolle gelagert.

Das zumindest eine Abdeckelement kann einfach durch Verschwenken um die Schwenkachse bezogen auf den Verlauf des Sägeseils beziehungsweise den Seil-Umlenkwinkel in einem grossen Winkelbereich zur ortsfesten Schutzabdeckung ausgerichtet werden. Tritt beispielsweise beim Sägevorgang ein Seilriss auf, so schränkt das Abdeckelement das Peitschen des gerissenen Sägeseils durch den vergrösserten abgedeckten Bereich um die Umlenkrolle ein. Die verschwenkbare Lagerung des Abdeckelementes an der Rollenachse der Umlenkrolle ermöglicht eine einfache Anordnung des Abdeckelementes mit wenigen einzelnen Teilen.

Zudem verhindert das Abdeckelement, insbesondere wenn dieses einen radial beabstandeten Wandabschnitt aufweist, dass dem Sägeseil anhaftender Schmutz und Wasser bei der Umlenkung des Sägeseils nach aussen hin weggeschleudert wird. Vorteilhaft weist die Schutzabdeckung ebenfalls einen in Bezug auf die Rollenachse der Umlenkrolle radial beabstandeten Wandabschnitt auf, so dass diese Wandabschnitte in einer teilweise überlappenden Anordnung zueinander einen grossen Bereich um die Umlenkrolle nach radial aussen abdecken. Weiter vorteilhaft ist der radiale Abstand des entsprechenden Wandabschnitts des Abdeckelementes grösser als die grösste radiale Erstreckung der ortsfesten Schutzabdeckung jeweils bezogen auf die Rollenachse der Umlenkrolle, damit das Abdeckelement über die Schutzabdeckung hinweg verschwenkbar ist.

Vorzugsweise ist eine Fixiervorrichtung zur Festlegung des Abdeckelementes in der gewünschten Ausrichtung in Bezug auf die Schutzabdeckung vorgesehen, damit sich die Ausrichtung des Abdeckelementes zur ortsfesten Schutzabdeckung nicht ungewollt verändern kann. Vorteilhaft übt die Fixiervorrichtung im verspannten Zustand eine Klemmkraft auf das Abdeckelement und die Schutzabdeckung aus, wobei die Umlenkrolle weiterhin um die Rollenachse frei drehen kann.

In einer bevorzugten Ausführung umfasst die Fixiervorrichtung ein Federelement, das beispielsweise als Tellerfeder ausgebildet ist und zumindest auf das Abdeckelement, z. B. reibschlüssig wirkt. Vorteilhaft ist die Fixiervorrichtung im Bereich der Rollenachse der Umlenkrolle vorgesehen, was eine einfache Fixierung mit wenigen Bestandteilen ermöglicht.

Vorzugsweise ist zur Führung des Abdeckelementes zu der Schutzabdeckung eine Führungsvorrichtung für das Abdeckelement vorgesehen. Die Führungsvorrichtung weist zur Begrenzung des Verschwenkbereichs vorteilhaft zwei Anschläge auf, zwischen denen das Abdeckelement in einer beliebigen Winkelstellung zwischen den Anschlägen zu der Schutzabdeckung festlegbar ist. In einer Variante ist die oder eine weitere Fixiervorrichtung für das Abdeckelement Bestandteil der Führungseinrichtung, wobei vorteilhaft ein dazu geeignetes Fixierelement gleichzeitig das Anschlagelement der Führungseinrichtung ausbildet.

Bevorzugt umfasst die Führungseinrichtung ein Langloch sowie ein im Langloch angeordnetes Anschlagelement, wobei die Enden des Langlochs mit dem Anschlagelement den maximalen Verschwenkbereich des Abdeckelementes bestimmen. Kommen die Enden des Langlochs mit dem Anschlagelement in Anschlag ist ein weiteres Verschwenken des Abdeckelementes verhindert.

In einer bevorzugten Ausführung sind das Langloch im Abdeckelement und das Anschlagelement an der Schutzabdeckung vorgesehen. Vorteilhaft weist das Langloch eine konstante Breite auf und verläuft entlang einer gebogenen, radial zur Rollenachse der Umlenkrolle verlaufenden Längsachse, so dass zwischen dem Anschlagelement und dem Langloch über den gesamten Verschwenkbereich des Abdeckelementes das vorgesehene Spiel sich nur unwesentlich verändert. Das Anschlagelement ist beispielsweise ein von der Schutzabdeckung der Umlenkrolle abgewandt, abragendes Element, wie beispielsweise ein Bolzen oder eine Nocke.

Bevorzugt ist das freie, dem Sägeseil zugewandte Ende eines radial zur Rollenachse der Umlenkrolle beabstandeten Wandabschnitts des Abdeckelementes abgerundet, so dass in diesem Bereich keine scharfe Kante des freien Endes vorhanden ist. Dadurch wird im Fall eines Seilrisses das mit dem frelen Ende des Abdeckelementes In Anlage kommende Sägeseil weniger beschädigt.

Die Erfindung wird nachstehend anhand von Ausführungsbeispielen näher erläutert. Es zeigen:
- Fig.: 1 Eine Umlenkvorrichtung für eine Seilsägevorrichtung in Seitenansicht;
- Fig. 2: die Umlenkvorrichtung in einer Aufsicht gem. Linie II-II in Fig. 1;
- Fig. 3: einen Schnitt entlang der Linie III-III In Fig. 1;
- Fig. 4: ein zweites Ausführungsbeispiel einer Umlenkrollenvorrichtung in Seitenansicht.

Grundsätzlich sind in den Figuren gleiche Teile mit den gleichen Bezugszeichen versehen.

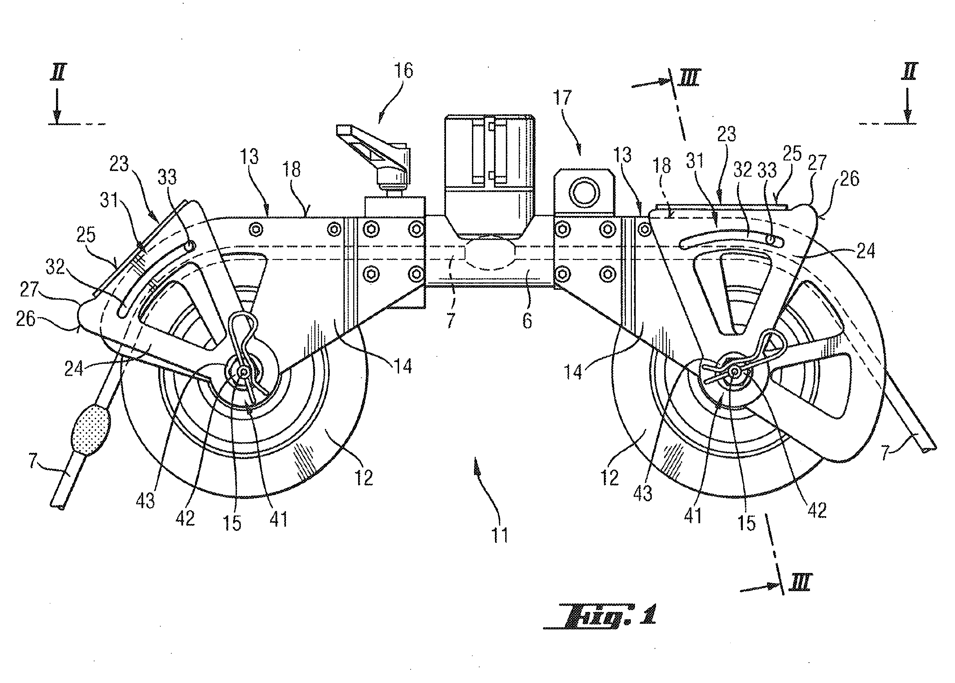

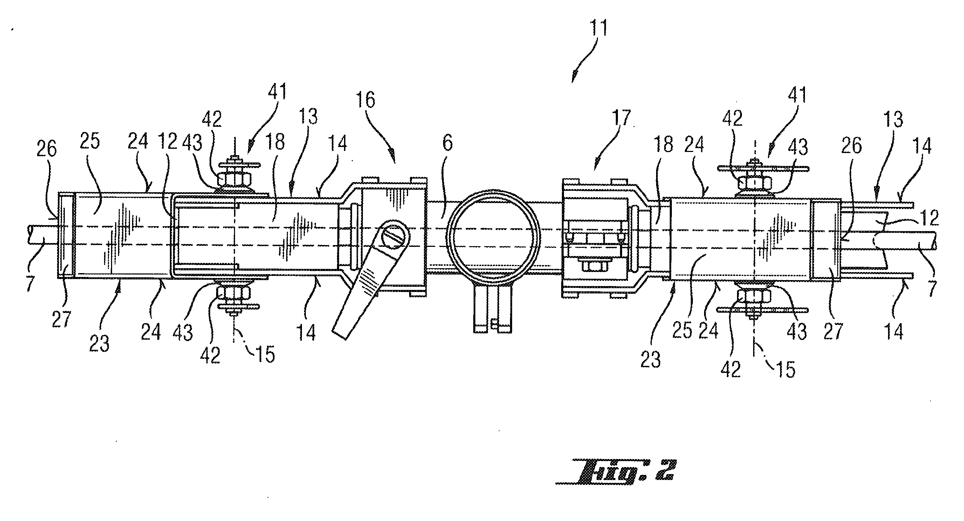

In den Figuren 1 bis 3 ist eine Umlenkvorrichtung 11 für eine Seilsägevorrichtung mit zwei Umlenkrollen 12 gezeigt, die an einem Trägerelement 6 festgelegt sind. Beide Umlenkrollen 12 sind im Wesentlichen gleich ausgebildet und weisen jeweils eine die jeweilige Umlenkrolle 12 bereichsweise umgebende, ortsfeste Schutzabdeckung 13 auf. Die Schutzabdeckung 13 weist bereichsweise im Schnitt quer zur Umlenkrollen 12 einen U-förmigen Querschnitt mit einem bezogen auf die Rollenachse 15 der Umlenkrolle 12 radialen Wandabschnitt 18 auf. Im Bereich eines freien Endes der Schenkel 14 der Schutzabdeckung 13 ist eine Durchführöffnung für die Lagerung der Rollenachse 15 der Umlenkrolle 12 vorgesehen. Über eine Festlegeeinrichtung 16 bzw. 17 ist die Schutzabdeckung 13 lösbar an dem Trägerelement 6 festgelegt.

Weiter ist bei jeder Umlenkrolle 12 ein Abdeckelement 23 mit einem in Bezug auf die Rollenachse 15 der Umlenkrolle 12 radial beabstandeten Wandabschnitt 25 vorgesehen, das verschwenkbar an der Schutzabdeckung 13 angeordnet ist. Das Abdeckelement 23 ist schwenkbar an der Rollenachse 15 der Umlenkrolle 12 gelagert. Das Abdeckelement 23 weist im Schnitt quer zur Umlenkrolle 12 ebenfalls eine U-förmige Ausgestaltung sowie im Bereich der freien Enden der Schenkel 24 des Abdeckelementes 23 jeweils eine Durchführöffnung für die Rollenachse 15 der Umlenkrolle 12 auf.

Der radiale Abstand des radial beabstandeten Wandabschnitts 25 des Abdeckelementes 23 ist grösser als der radiale Abstand des radialen Wandabschnitts 18 der Schutzabdeckung 13 ausgebildet jeweils bezogen auf die Rollenachse 15 der Umlenkrolle 12.

Zur Führung und Begrenzung des Verschwenkbereichs des Abdeckelementes 23 in Bezug auf die Schutzabdeckung 13 ist jeweils eine Führungseinrichtung 31 vorgesehen, die ein im Schenkel 24 des Abdeckelementes 23 angeordnetes, in einem bestimmten Abstand zur Rollenachse 15 der Umlenkrolle 12 bogenförmig verlaufendes Langloch 32 sowie ein von dem Schenkel 14 der Schutzabdeckung 13 abragendes sowie im Langloch 32 angeordnetes Anschlagelement 33 umfasst.

Weiter ist an der Rollenachse 15 der Umlenkrolle 12 eine Fixiervorrichtung 41 zur Festlegung des Abdeckelementes 23 in der gewünschten Ausrichtung zur Schutzabdeckung 13 vorgesehen. Die Fixiervorrichtung 41 umfasst als Federelement 43 eine Tellerfeder, die zwischen einer an der Rollenachse 15 der Umlenkrolle 12 aufgeschraubten Befestigungsmutter 42 und der Aussenseite des Abdeckelementes 23 angeordnet ist. Beim Verspannen der Fixiervorrichtung 41 wirkt das Federelement 43 reibschlüssig auf das Abdeckelemente 23 und fixiert dieses in der gewünschten Ausrichtung. Die Fixiervorrichtung 41 ist derart ausgebildet, dass auch in deren verspannten Zustand die Umlenkrolle 12 frei drehen kann.

Jedes Abdeckelemente 23 weist am freien, dem Sägesell 7 zugewandten Ende 26 des radial zur Rollenachse 15 der Umlenkrolle 13 beabstandeten Wandabschnitts 25 eine Abrundung 27 auf.

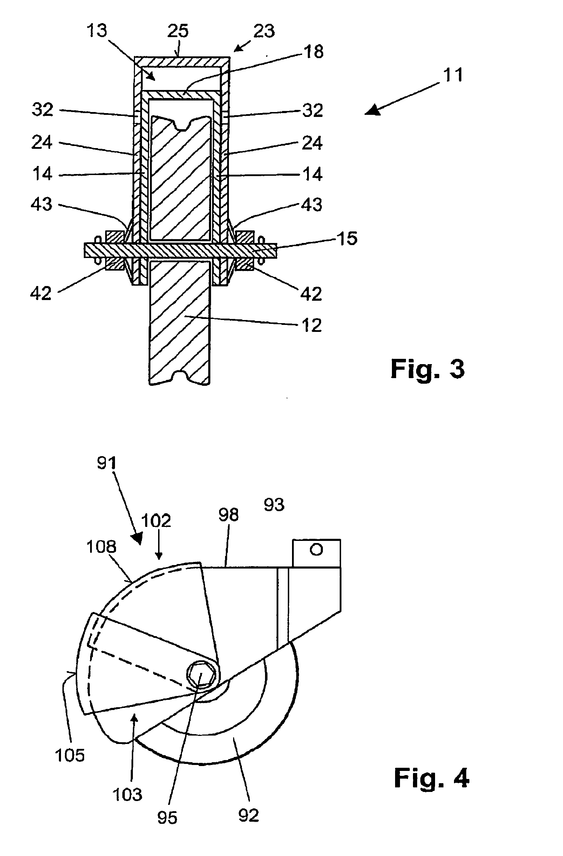

Die in Figur 4 gezeigte Variante einer erfindungsgemässen Umlenkvorrichtung 91 für eine Seilsägevorrichtung weist eine Umlenkrolle 92 auf, welche bereichsweise von einer ortsfesten Schutzabdeckung 93 sowie zwei verschwenkbar an der Schutzabdeckung 93 angeordneten Abdeckelemente 102 und 103 umgeben ist. Der radiale Abstand des radial beabstandeten Wandabschnitts 105 des Abdeckelementes 103 ist grösser als der radiale Abstand des radial beabstandeten Wandabschnitts 108 des Abdeckelementes 102 ausgebildet, wobei der radiale Abstand des radial beabstandeten Wandabschnitts 108 des Abdeckelementes 102 grösser als der radiale Abstand des radialen Wandabschnitts 98 der Schutzabdeckung 93 ausgebildet ist, jeweils bezogen auf die Rollenachse 95 der Umlenkrolle 92. Die Abdeckelemente 102 und 103 sind fächerartig zusammenschiebbar und ausbreitbar.

## Patentansprüche

1. Umlenkvorrichtung für eine Seilsägevorrichtung mit einer Umlenkrolle (12; 92), die eine die Umlenkrolle (12; 92) zumindest bereichsweise umgebende, ortsfeste Schutzabdeckung (13; 93) sowie zumindest ein Abdeckelement (23; 102, 103) aufweist, das entlang einer radial zur Rollenachse (15; 95) der Umlenkrolle (12; 92) beabstandeten Bahn versetzbar ist, wobei das Abdeckelement (23; 102, 103) verschwenkbar an der Schutzabdeckung (13; 93) angeordnet ist, **dadurch gekennzeichnet, dass** das Abdeckelement (23; 102, 103) verschwenkbar an der Rollenachse (15; 95) der Umlenkrolle (12; 92) gelagert ist.

2. Umlenkvorrichtung nach Anspruch 1, **dadurch gekennzeichnet, dass** eine Fixiervorrichtung (41) zur Festlegung des Abdeckelementes (23) in der gewünschten Ausrichtung in Bezug auf die Schutzabdeckung (13) vorgesehen ist.

3. Umlenkvorrichtung nach Anspruch 2, **dadurch gekennzeichnet, dass** die Fixiervorrichtung (41) ein Federelement (43) umfasst.

4. Umlenkvorrichtung nach einem der Ansprüche 1 bis 3, **dadurch gekennzeichnet, dass** zur Führung des Abdeckelementes (23) zu der Schutzabdeckung (13) eine Führungseinrichtung (31) für das Abdeckelement (23) vorgesehen ist.

5. Umlenkvorrichtung nach Anspruch 4, **dadurch gekennzeichnet, dass** die Führungseinrichtung (31) ein Langloch (32) sowie ein im Langloch (32) angeordnetes Anschlagelement (33) umfasst.

6. Umlenkvorrichtung nach Anspruch 5, **dadurch gekennzeichnet, dass** das Langloch (32) im Abdeckelement (23) und das Anschlagelement (33) an der Schutzabdeckung (13) vorgesehen ist.

7. Umlenkvorrichtung nach einem der Ansprüche 1 bis 6, **dadurch gekennzeichnet, dass** das freie, dem Sägeseil (7) zugewandte Ende (26) eines radial zur Rollenachse (15) der Umlenkrolle (12) beabstandeten Wandabschnitts (25) des Abdeckelementes (23) abgerundet ist.

## Claims

1. Deflection device for a wire saw device, having a deflection roller (12; 92) which comprises a fixed protective cover (13; 93) which at least partially surrounds the deflection roller (12; 92) and at least one cover element (23; 102, 103) which is displaceable along a track which is spaced radially relative to the roller axis (15; 95) of the deflection roller (12; 92), wherein the cover element (23; 102, 103) is pivotably arranged on the protective cover (13; 93), **characterised in that** the cover element (23; 102, 103) is pivotably mounted on the roller axis (15; 95) of the deflection roller (12; 92).

2. Deflection device according to claim 1, **characterised in that** a fixing device (41) for fastening the cover element (23) in the desired orientation in relation to the protective cover (13) is provided.

3. Deflection device according to claim 2, **characterised in that** the fixing device (41) comprises a spring element (43).

4. Deflection device according to one of the claims 1 to 3, **characterised in that**, for guiding the cover element (23) to the protective cover (13), a guiding device (31) for the cover element (23) is provided.

5. Deflection device according to claim 4, **characterised in that** the guiding device (31) comprises a slot (32) and a stop element (33) arranged in said slot (32).

6. Deflection device according to claim 5, **characterised in that** the slot (32) is provided in the cover element (23) and the stop element (33) is provided on the protective cover (13).

7. Deflection device according to one of the claims 1 to 6, **characterised in that** the free end (26) of a wall section (25) of the cover element (23) facing toward the wire saw (7) and spaced radially relative to the roller axis (15) of the deflection roller (12) is rounded.

## Revendications

1. Dispositif de déviation pour un dispositif de scie à fil comportant une poulie de renvoi (12 ; 92), lequel dispositif de déviation comporte un carter de protection fixe (13 ; 93) entourant au moins certaines zones de la poulie de renvoi (12 ; 92), ainsi qu'au moins un élément de carter (23 ; 102, 103) qui est mobile le long d'un trajet radialement espacé par rapport à l'axe de galet (15 ; 95) de la poulie de renvoi (12 ; 92), l'élément de carter (23 ; 102, 103) étant monté de manière pivotante sur le carter de protection (13 ; 93), **caractérisé en ce que** l'élément de carter (23 ; 102, 103) est supporté de manière pivotante sur l'axe de poulie (15 ; 95) de la poulie de renvoi (12 ; 92).

2. Dispositif de déviation selon la revendication 1, **caractérisé en ce qu'**un dispositif de fixation (41) est prévu pour fixer l'élément de carter (23) dans l'orientation voulue par rapport au carter de protection (13).

3. Dispositif de déviation selon la revendication 2, **caractérisé ce que** le dispositif de fixation (41) comporte un élément de ressort (43).

4. Dispositif de déviation selon l'une quelconque des revendications 1 à 3, **caractérisé en ce qu'**un dispositif de guidage (31) est prévu pour l'élément de carter (23) afin de guider l'élément de carter (23) jusqu'au carter de protection (13).

5. Dispositif de déviation selon la revendication 4, **caractérisé en ce que** le dispositif de guidage (31) comporte un trou oblong (32) ainsi qu'un élément de butée (33) agencé dans le trou oblong (32).

6. Dispositif de déviation selon la revendication 5, **caractérisé en ce que** le trou oblong (32) est agencé dans l'élément de carter (23) et l'élément de butée (33) est agencé sur le carter de protection (13).

7. Dispositif de déviation selon l'une quelconque des revendications 1 à 6, **caractérisé en ce qu'**une partie de paroi (25) de l'élément de carter (23), radialement espacée par rapport à l'axe de poulie (15) de la poulie de renvoi (12), est arrondie à l'extrémité libre (26) dirigée vers la scie à fil (7).
